(19) Europäisches Patentamt
European Patent Office
Office européen des brevets

(11) **EP 1 223 687 B1**

(12) **FASCICULE DE BREVET EUROPEEN**

(45) Date de publication et mention
de la délivrance du brevet:
**29.08.2007 Bulletin 2007/35**

(51) Int Cl.:
*H04B 1/707* (2006.01)       *H04L 27/38* (2006.01)
*H04L 25/06* (2006.01)

(21) Numéro de dépôt: **02290089.8**

(22) Date de dépôt: **14.01.2002**

(54) **Méthode simplifiée de détection par sphères en présence de faible rapport signal à bruit**

Vereinfachtes Detektionsverfahren unter Verwendung von Kugeln in der Gegenwart von niedrigem Signal-Rausch-Verhältnis

Simplified detection method using spheres in the presence of a low signal-to-noise ratio

(84) Etats contractants désignés:
**AT BE CH CY DE DK ES FI FR GB GR IE IT LI LU MC NL PT SE TR**

(30) Priorité: **15.01.2001 FR 0100627**

(43) Date de publication de la demande:
**17.07.2002 Bulletin 2002/29**

(73) Titulaire: **Mitsubishi Electric Information Technology Centre Europe B.V.**
**1119 NS Schiphol Rijk (NL)**

(72) Inventeur: **Brunel, Loic,**
**Mitsubishi Electric ITE**
**35700 Rennes (FR)**

(74) Mandataire: **Maillet, Alain**
**SCP Le Guen & Maillet,**
**5, Place Newquay,**
**B.P. 70250**
**35802 Dinard Cedex (FR)**

(56) Documents cités:
**EP-A- 0 641 102        EP-A- 0 827 311**
**WO-A-00/41374**

• **PARKER G J: "Techniques for the blind estimation of signal to noise ratio for quadrature modulated signals" FOURTH INTERNATIONAL SYMPOSIUM ON SIGNAL PROCESSING AND ITS APPLICATIONS. ISSPA 96. PROCEEDINGS MAIN SYMPOSIUM, PROCEEDINGS OF FOURTH INTERNATIONAL SYMPOSIUM ON SIGNAL PROCESSING AND ITS APPLICATIONS, GOLD COAST, QLD., AUSTRALIA, 25-30 AUG. 1996, pages 238-241 vol.1, XP002178997 1996, Brisbane, Qld., Australia, Queensland Univ. Technol, Australia ISBN: 1-86435-209-4**

**Description**

La présente invention concerne une méthode et un dispositif de détection multi-utilisateur. Plus particulièrement, la présente invention concerne une méthode et un dispositif de détection multi-utilisateur pour un système de télécommunication DS-CDMA ou MC-CDMA.

Dans un système de télécommunication mobile DS-CDMA *(Direct Sequence Code Division Multiple Access)*, la séparation des communications en provenance ou à destination des différents utilisateurs est réalisée en multipliant chaque symbole complexe d'un utilisateur par une séquence d'étalement qui est propre à ce dernier, encore appelée pour cette raison signature de l'utilisateur. La fréquence d'étalement (chip rate) étant supérieure à la fréquence des symboles, le signal transmis par chaque utilisateur est distribué (ou étalé) dans l'espace des fréquences. Le rapport entre la bande occupée par le signal étalé et la bande occupée par le signal d'information est appelé facteur d'étalement. A la réception, la séparation d'un utilisateur donné est obtenue grâce à un filtrage adapté à la signature correspondante. Lorsque le canal de transmission présente une pluralité de trajets de propagation, la sortie du filtrage adapté comporte autant de pics de corrélation. Chaque trajet du canal peut être modélisé par un coefficient multiplicatif complexe et un retard. Les signaux s'étant propagés selon les différents trajets peuvent être alignés et combinés au moyen de coefficients complexes conjugués des coefficients de trajet, réalisant ainsi un filtrage adapté au canal de transmission. Pour simplifier la terminologie nous engloberons dans l'expression générale « filtrage adapté à l'utilisateur k » à la fois l'opération de filtrage adapté à la signature de l'utilisateur k et celle de filtrage adapté au canal de transmission.

Pour combattre l'interférence entre signaux à destination (liaison descendante) ou en provenance (liaison montante) des différents utilisateurs, il a été proposé des méthodes de détection multi-utilisateur et notamment des méthodes de détection itératives telles que celles connues sous le nom de PIC (*Parallel Interference Cancellation)* et SIC (*Serial Interference Cancellation).* Elles sont fondées sur l'itération d'un cycle d'élimination des interférences comportant l'estimation des symboles émis, l'évaluation des interférences et leur soustraction des signaux reçus. Bien que performantes, ces méthodes ne sont pas optimales dans la mesure où elles ne fournissent pas une estimation au sens du maximum de vraisemblance des symboles transmis par les différents utilisateurs.

Une méthode de détection multi-utilisateur à maximum de vraisemblance inspirée de l'algorithme de Viterbi a été proposée par S. Verdu dans un article intitulé « Minimum probability of error for asynchronous Gaussian multiple access channels » publié dans IEEE Transactions on Information Theory, pages 85-96, Janvier 1986 mais sa complexité est prohibitive car elle varie de manière exponentielle avec le nombre d'utilisateurs .

Plus récemment il a été proposé par L. Brunel et al., dans un article intitulé « Euclidian space lattice decoding for joint detection in CDMA system » publié dans Proceedings of ITW, page 129, Juin 1999, une méthode de détection multi-utilisateur à maximum de vraisemblance utilisant une représentation par réseau de points. Selon cette méthode on détermine un vecteur caractéristique du signal reçu représentant une statistique suffisante pour la détection au maximum de vraisemblance des symboles transmis par les différents utilisateurs. On montre sous certaines conditions que le vecteur caractéristique peut être représenté comme le point d'un réseau perturbé par un bruit. La détection consiste alors à rechercher le point du réseau le plus proche du point correspondant au vecteur reçu. Cependant, la dimension du réseau à utiliser étant en général de $2.K$ où $K$ est le nombre d'utilisateurs le nombre de points à tester est élevé. Pour simplifier la détection, il a été proposé de limiter la recherche du plus proche voisin aux points du réseau appartenant à une sphère centrée autour du point reçu. Nous exposerons ci-après cette méthode de détection simplifiée dite « méthode de détection par sphères » :

Nous nous plaçons dans le contexte d'un système de télécommunication mobile à accès multiple avec étalement de spectre par séquences directes (DS-CDMA) comprenant $K$ utilisateurs communiquant de manière synchrone avec une station de base.

Soit $d_k(i)$ le symbole complexe émis par l'utilisateur $k$ à l'instant $i$. Ce symbole appartient à la constellation de modulation $\mathbf{A_k}$ utilisée par l'utilisateur $k$, que l'on appellera encore alphabet de symboles de l'utilisateur $k$. Chaque utilisateur $k$ transmet un bloc de $N$ symboles avec une amplitude du signal $a_k$. Les symboles sont étalés par une signature complexe $s_k(t) = s_k^R(t) + j.s_k^I(t)$ de durée égale à la période symbole $T$ :

$$s_k(t) = 0 \text{ si } t \notin [0,T[$$

Les $K$ symboles complexes $d_k(i) = d_k^R(i) + j.d_k^I(i)$ transmis à l'instant $i$ sont placés dans un vecteur ligne de valeurs réelles $\mathbf{d}_2(i)$ défini comme :

$$\mathbf{d}_2(i) = \left(d_1^R(i), d_1^I(i), \ldots, d_K^R(i), d_K^I(i)\right) \tag{1}$$

Le signal modulé correspondant est alors, en fonction du temps $t$ :

$$S_t = \sum_{i=0}^{N-1} \sum_{k=1}^{K} a_k d_k(i) s_k(t - iT) \tag{2}$$

Nous supposons que le canal est un canal idéal à bruit blanc additif gaussien. Soit $\eta = S_t + \eta_t$ le signal reçu au temps $t$ et $\eta_t$ un bruit gaussien complexe de moyenne nulle et dont les composantes ont une variance $N_0$.

Soit le vecteur ligne $\mathbf{y}_2(i) = \left(y_1^R(i), y_1^I(i), \ldots, y_K^R(i), y_K^I(i)\right)$ tel que $y_k(i) = y_k^R(i) + j \cdot y_k^I(i)$ soit la sortie complexe à l'instant $i$ du filtre adapté à l'utilisateur $k$ :

$$y_k(i) \stackrel{\Delta}{=} \int_{-\infty}^{+\infty} s_k^*(t - iT) n \, \mathrm{d}t$$

$$= \sum_{\ell=1}^{K} a_\ell d_\ell(i) \int_0^T s_\ell(t) s_k^*(t) \mathrm{d}t + n_k(i) \tag{3}$$

$$= \sum_{\ell=1}^{K} a_\ell d_\ell(i) R_{\ell k} + n_k(i)$$

avec $R_{\ell k} = \int_0^T s_\ell(t) s_k^*(t) \mathrm{d}t = R_{\ell k}^R + j \cdot R_{\ell k}^I$ pour $k, \ell = 1, \ldots, K$ et $n_k(i) = \int_0^T \eta \cdot s_k^*(t - i \cdot T) \mathrm{d}t$

La matrice $\mathbf{R}$ d'autocorrélation des séquences d'étalement dépend en général de l'indice $i$ car les signatures des différents utilisateurs peuvent changer au cours du temps. Cependant, pour des raisons de simplification de notation, nous omettrons cet indice par la suite.

Si l'on décompose les éléments complexes de (3) en leurs parties réelles et imaginaires, on obtient :

$$\left[y_k^R(i) + j \cdot y_k^I(i)\right] = \sum_{\ell=1}^{K} a_\ell \left[b_\ell^R(i) R_{\ell k}^R - b_\ell^I(i) R_{\ell k}^I\right] + j \cdot \sum_{\ell=1}^{K} a_\ell \left[b_\ell^R(i) R_{\ell k}^I + b_\ell^I(i) R_{\ell k}^R\right] + \left[n_k^R(i) + j \cdot n_k^I(i)\right] \tag{4}$$

Soient $\mathbf{A}_2 = \mathbf{Diag}(a_1, a_1, \ldots, a_K, a_K)$ et $\mathbf{R}_2$ la matrice de taille $2K \times 2K$ telle que:

$$\mathbf{R}_2 = \begin{bmatrix} R_{11}^R & R_{11}^I & \cdots & R_{1K}^R & R_{1K}^I \\ -R_{11}^I & R_{11}^R & \cdots & -R_{1K}^I & R_{1K}^R \\ \vdots & \vdots & & \vdots & \vdots \\ R_{K1}^R & R_{K1}^I & \cdots & R_{KK}^R & R_{KK}^I \\ -R_{K1}^I & R_{K1}^R & \cdots & -R_{KK}^I & R_{KK}^R \end{bmatrix} \tag{5}$$

L'équation (4) peut alors se mettre sous forme matricielle :

$$\mathbf{y}_2(i) = \mathbf{d}_2(i) \mathbf{M}_2 + \mathbf{n}_2(i) \tag{6}$$

où $\mathbf{M}_2$ est une matrice réelle de taille $2K \times 2K$ définie par $\mathbf{M}_2 = \mathbf{A}_2 \mathbf{R}_2$ et où le vecteur de bruit

$$\mathbf{n}_2(i)=\left(n_1^R(i),n_1^I(i),...,n_k^R(i),n_k^I(i)\right)$$ a pour matrice de covariance $N_0\mathbf{R}_2$.

Nous démontrerons ci-après que $\mathbf{y}_2(i)$, tel que donné par l'équation (6), peut être représenté comme un point d'un réseau $\Lambda_2$ de dimension 2.$K$, de matrice génératrice $\mathbf{M}_2$ corrompu par un bruit $\mathbf{n}_2$.

Nous appellerons réseau réel de points $\Lambda$ de dimension $\kappa$ tout ensemble de vecteurs de $\mathbf{R}^\kappa$ vérifiant :

$$\mathbf{x}=b_1\mathbf{v}_1+b_2\mathbf{v}_2+...+b_\kappa\mathbf{v}_\kappa \text{ où } b_i\in\mathbf{Z},\forall i=1,...,\kappa$$

et où $\{\mathbf{v}_1,\mathbf{v}_2,...,\mathbf{v}_\kappa\}$ est une base sur $\mathbf{R}^\kappa$.

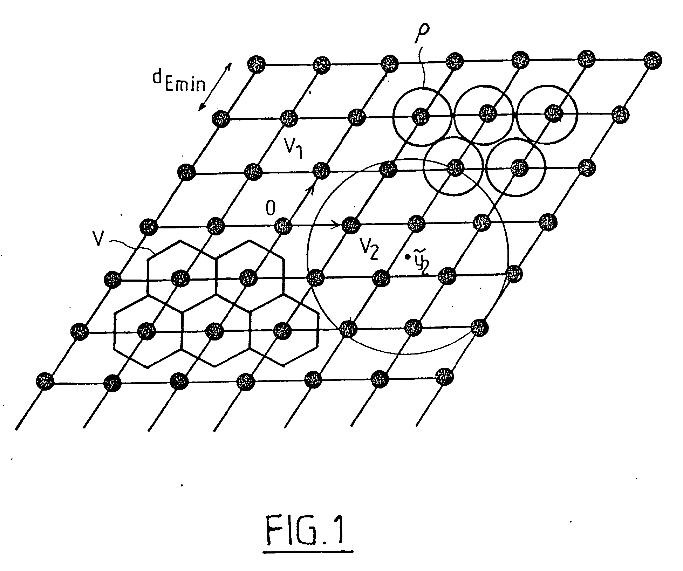

Un exemple de réseau de points de dimension 2 a été représenté en Fig. 1.

Les points du réseau forment un sous-groupe abélien additif de $\mathbf{R}^\kappa$, c'est d'ailleurs le plus petit sous-groupe de $\mathbf{R}^\kappa$ contenant les vecteurs $\{v_1, v_2,..., v_\kappa\}$ et un $\mathbf{Z}$-module de $\mathbf{R}^\kappa$. Ces vecteurs de base forment les lignes de la matrice génératrice $\mathbf{G}$ du réseau. On peut donc écrire

$$\mathbf{x} = \mathbf{bG} \text{ où } \mathbf{b}=\left(b_1,...,b_\kappa\right)\in\mathbf{Z}^\kappa . \qquad (7)$$

La région délimitée par les vecteurs de base est appelée parallélotope fondamental et son volume, noté vol ($\Lambda$) ou det($\Lambda$), est nommé volume fondamental. Ce volume fondamental n'est autre que le module du produit vectoriel des $\kappa$ vecteurs de base et est donc égal à |det($\mathbf{G}$)| où det(.) désigne le déterminant. S'il existe plusieurs choix possibles pour la matrice génératrice d'un même réseau, il n'existe par contre qu'une unique valeur pour le volume fondamental.

La région de Voronoï V ou cellule de Dirichlet d'un point $\mathbf{x}$ appartenant au réseau est l'ensemble des points de $\mathbf{R}^\kappa$ plus proches de $\mathbf{x}$ que de tout autre point du réseau. Le volume de cette région est égal au volume fondamental.

Le rayon d'empilement $\rho$ du réseau est le rayon de la plus grande sphère inscrite dans la région de Voronoï et le rayon de recouvrement celui de la plus petite sphère circonscrite à cette même région. Le rayon d'empilement est donc le rayon des sphères dont l'empilement constitue le réseau de points et le rayon de recouvrement est celui des sphères les plus petites qui, centrées sur les points du réseau, permettent de recouvrir tout l'espace $\mathbf{R}^\kappa$. La densité du réseau est le rapport entre le volume de la sphère de rayon $\rho$ et le volume fondamental. Enfin, le coefficient d'erreur (kissing number) $\tau(\Lambda)$ du réseau est le nombre de sphères tangentes à une même sphère dans l'empilement ou, en d'autres termes, le nombre de voisins d'un point du réseau, situés à la distance minimale $d_{Emin} = 2\rho$.

Considérons à nouveau l'équation (6). Les composantes du vecteur $\mathbf{d}_2(i)$ appartiennent à un alphabet fini $\mathbf{A}$ de cardinal :

$$Card(\mathbf{A})=\prod_{k=1}^{\kappa}Card(\mathbf{A}_k) \qquad (8)$$

Nous appellerons $\mathbf{A}$ la constellation du système (ou simplement constellation) par opposition aux $\mathbf{A}_k$ dites constellations de modulation.

Supposons par exemple que les composantes $d_k^R(i)$ et $d_k^I(i)$ soient des symboles de modulation PAM d'ordre M :

$$d_k^R(i)\in\{-M+1,-M+3,...,M-3,M-1\} \text{ et} \qquad (9)$$

$$d_k^I(i)\in\{-M+1,-M+3,...,M-3,M-1\} \qquad (10)$$

Si l'on effectue la transformation :

$$d_k'^R(i)=\frac{1}{2}\left(d_k^R(i)+M-1\right) \text{ et } d_k'^I(i)=\frac{1}{2}\left(d_k^I(i)+M-1\right) \text{ soit encore de manière vectorielle :}$$

$$\mathbf{d'}_2(i)=\frac{1}{2}\big(\mathbf{d}_2(i)+\mathbf{v}_M\big) \qquad (11)$$

où $\mathbf{v_M}=(M\text{-}1,M\text{-}1,...,M\text{-}1)$

les composantes $d_k^R(i)$ et $d_k^I(i)$ sont des éléments de $\mathbf{Z}$ et par suite $\mathbf{d'}_2(i)$ est un vecteur de $\mathbf{Z}^{2K}$.

De manière générale, s'il existe une transformation affine transformant les composantes $d_k^R(i)$ et $d_k^I(i)$ en des éléments de $\mathbf{Z}$, on peut représenter le vecteur $\mathbf{d'}_2(i)$ par un vecteur de $\mathbf{Z}^{2K}$.

De manière similaire, on effectue la transformation correspondante sur $\mathbf{y}_2(i)$, c'est-à-dire :

$$\mathbf{y'}_2(i)=\frac{1}{2}\big(\mathbf{y}_2(i)+\mathbf{v}_M\mathbf{M}_2\big) \qquad (12)$$

Moyennant cette transformation, que nous supposerons implicite dans la suite, le vecteur $\mathbf{d}_2(i)\mathbf{M}_2$ appartient alors à un réseau de points $\Lambda_2$ de dimension $2.K$ tel que défini par la relation (7) avec $\mathbf{G=M_2}$. Le vecteur $\mathbf{y}_2(i)$ peut donc être considéré comme un point du réseau $\Lambda_2$ corrompu par un bruit $\mathbf{n}_2(i)$.

Si l'on suppose que les composantes du vecteur de bruit $\mathbf{n}_2(i)$ sont des variables aléatoires indépendantes gaussiennes centrées, le problème de la détection au sens du maximum de vraisemblance des symboles émis par les différents utilisateurs se ramène à la recherche du point $\mathbf{z_2}$ du réseau $\Lambda_2$ tel que sa distance à $\mathbf{y}_2(i)$ soit minimale.

En réalité, les composantes du vecteur de bruit $\mathbf{n_2}(i)$ sont corrélées et la matrice de covariance de $\mathbf{n_2}(i)$ est $N_0\mathbf{R}_2$.

Afin de se ramener au cas décorrélé il faut effectuer préalablement au décodage une opération de blanchiment du bruit.

La matrice $\mathbf{R}$ étant hermitienne, la matrice d'autocorrélation $\mathbf{R_2}$ est symétrique définie positive et peut donc faire l'objet d'une factorisation de Cholesky :

$$\mathbf{R}_2=\mathbf{W}_2\,\mathbf{W}_2^T \qquad (13)$$

où $\mathbf{W}_2$ est une matrice triangulaire inférieure de taille $2K\times 2K$.

On définit un vecteur d'observation blanchie :

$$\widetilde{\mathbf{y}}_2(i)=\mathbf{y}_2(i)\mathbf{W}_2^{T^{-1}} \qquad (14)$$

ainsi qu'un nouveau réseau de points $\Omega_2$ constitué des vecteurs de composantes $\big(\widetilde{x}_1^R(i),\widetilde{x}_1^I(i),...,\widetilde{x}_k^R(i),\widetilde{x}_k^I(i)\big)$ avec $\widetilde{\mathbf{x}}_2(i)=\mathbf{x}_2(i)\mathbf{W}_2^{T^{-1}}$ où $\mathbf{x}_2(i)$ est un vecteur de composantes $\big(x_1^R(i),x_1^I(i),...,x_k^R(i),x_k^I(i)\big)$ appartenant à $\Lambda_2$. Le réseau $\Omega_2$ a pour matrice génératrice $\mathbf{A}_2\mathbf{W}_2$, matrice réelle triangulaire inférieure.

On peut facilement montrer, qu'après blanchiment, la matrice de covariance du bruit filtré $\mathbf{n}_2(i)\mathbf{W}_2^{T^{-1}}$ est égale à $N_0\mathbf{I}_{2K}$ où $\mathbf{I}_{2K}$ est la matrice identité de dimension $2K$. La détection comprend donc une première étape de blanchiment du vecteur d'observation suivie d'une étape de recherche du plus proche voisin au sein du réseau de points $\Omega_2$.

Pour réduire le nombre de points à tester, comme illustré en Fig. 1, on peut limiter la recherche à une sphère centrée autour du point $\widetilde{\mathbf{y}}_2$. En pratique, le choix du rayon de la sphère résulte d'un compromis : il ne doit pas être trop grand pour ne pas conduire à un nombre de points trop élevé et suffisamment grand pour inclure au moins le plus proche voisin.

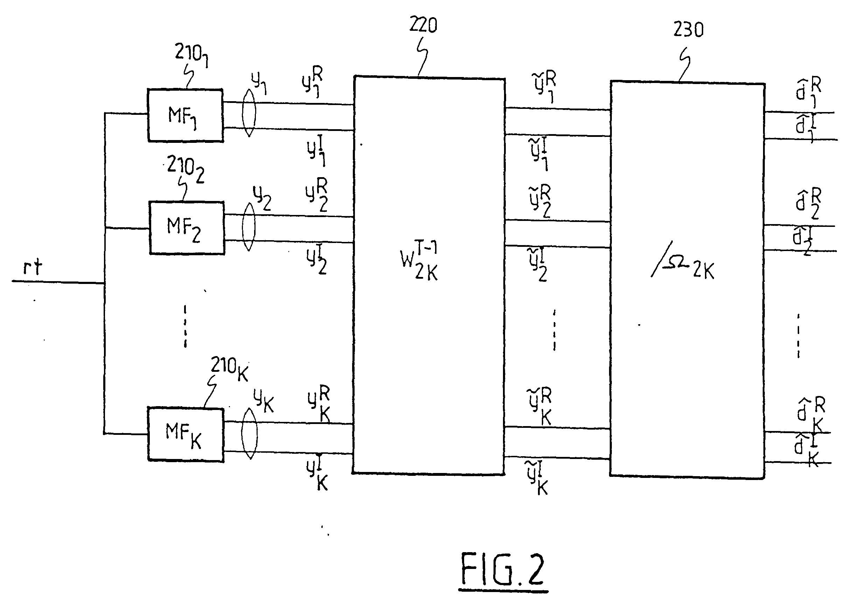

La Fig. 2 représente schématiquement un dispositif de détection multi-utilisateur utilisant une méthode de détection par sphères. Le signal reçu $n$ est filtré par une batterie de filtres adaptés à chacun des utilisateurs, $210_1,...,210_K$. Les composantes réelles et imaginaires du vecteur d'observation $\mathbf{y_2}(i)$ en sortie des filtres adaptés sont transmises à une unité de calcul matriciel effectuant l'opération de blanchiment spectral selon la relation (14). Les composantes réelles et imaginaires du vecteur blanchi $\widetilde{\mathbf{y}}_2(i)$ sont ensuite transmises à une unité de détection par sphères recherchant le plus proche voisin du point reçu au sein du réseau $\Omega_2$ de dimension 2.$K$. Les coordonnées du plus proche voisin donnent directement les composantes réelles et imaginaires des symboles estimés $\hat{d}_k(i)$ pour les différents utilisateurs.

L'étape de la recherche du plus proche voisin est gourmande en temps de calcul ce qui peut s'avérer très pénalisant lorsque le nombre d'utilisateurs est élevé. En outre, lorsque le rapport signal à bruit est faible, il est nécessaire de choisir un grand rayon pour la sphère de recherche et le risque est élevé de devoir considérer un grand nombre de points du réseau dans l'étape de recherche.

Le but de la présente invention est de proposer une simplification de la méthode de détection par sphères notamment en présence de faible rapport signal à bruit.

L'invention est définie par une méthode de détection d'une pluralité $K$ de symboles ($d_k(i)$) transmis par ou pour une pluralité $K$ d'utilisateurs à partir d'un signal reçu, chaque symbole d'un utilisateur appartenant à une constellation de modulation, la méthode de détection mettant en oeuvre un réseau de points ($\Xi$) généré par lesdites constellations de modulation, ladite pluralité de symboles des différents utilisateurs étant représentée par un point parmi un sous-ensemble de points dudit réseau, dit constellation et le signal reçu étant représenté par un point caractéristique de ce signal, dit point reçu, translaté d'un point de ladite constellation par un vecteur de bruit (**n**), la méthode comprenant une étape de projection orthogonale du point reçu sur un sous-espace affine, dit de projection, parallèle ou confondu avec un sous-espace affine délimitant ladite constellation et une étape de recherche du plus proche voisin du point ainsi projeté parmi les points de ladite constellation.

Avantageusement, ledit sous-espace affine délimitant la constellation est déterminé en fonction de la position du point reçu par rapport à ladite constellation.

Selon une variante de réalisation, la recherche du plus proche voisin est limitée aux points de la constellation appartenant à une sphère centrée sur ledit point projeté.

Si le sous-espace affine de projection est confondu avec un sous-espace affine délimitant la constellation, la recherche du plus proche voisin peut être effectuée parmi les points de la constellation appartenant audit sous-espace affine.

La recherche du plus proche voisin est avantageusement limitée aux points du sous-espace affine appartenant à une sphère dudit sous-espace centrée sur ledit point projeté.

Selon un mode avantageux de réalisation, l'étape de projection n'est effectuée que si le point reçu est éloigné de ladite constellation de plus d'une distance prédéterminée.

La présente invention trouve en particulier application à la transmission en mode DS-CDMA ou MC-CDMA. Dans ce cas, les symboles de chaque utilisateur faisant l'objet d'une multiplication par une signature de cet utilisateur avant d'être transmis sur un canal de transmission, les coordonnées du point reçu sont obtenues par une étape de filtrage adapté du signal reçu, le filtrage étant adapté aux canaux de transmission et aux signatures des différents utilisateurs.

La présente invention concerne également un dispositif de réception pour système de télécommunication DS-CDMA comprenant un dispositif de détection adapté à mettre en oeuvre la méthode de détection exposée ci-dessus.

La présente invention concerne encore un dispositif de réception pour système de télécommunication MC-CDMA comprenant un dispositif de détection adapté à mettre en oeuvre la méthode de détection exposée ci-dessus.

Les caractéristiques de l'invention mentionnées ci-dessus, ainsi que d'autres, apparaîtront plus clairement à la lecture de la description suivante faite en relation avec les figures jointes, parmi lesquelles :

La Fig. 1 représente un réseau de points utile à la méthode de détection employée dans le récepteur illustré en Fig. 2;
La Fig. 2 représente de manière schématique la structure d'un récepteur DS-CDMA multi-utilisateur utilisant une méthode de détection par sphères;
La Fig. 3 représente un exemple de constellation de modulation d'un utilisateur ;
La Fig. 4 illustre une opération préalable de projection sur la constellation selon l'invention ;
La Fig. 5 illustre un choix optimal de projection sur la constellation.

Considérons à nouveau un système de télécommunication DS-CDMA avec $K$ utilisateurs fonctionnant en mode synchrone. Comme on l'a vu plus haut, la détection des symboles transmis par les différents utilisateurs au sens du maximum de vraisemblance peut se ramener à la recherche parmi les points d'un réseau ($\Omega_2$) du plus proche voisin du point correspondant au signal reçu.

Dans le cas où les séquences d'étalement sont réelles ou plus généralement multiples réelles d'un même nombre complexe, on peut montrer que la recherche peut être effectuée dans un réseau de dimension réduite à $K$. En effet, les termes imaginaires de la matrice $\mathbf{R_2}$ et par suite de la matrice $\mathbf{M_2}$ étant nuls, on peut se ramener à un réseau de points réel $\Lambda$ de dimension $K$ et de matrice génératrice $\mathbf{M}$ :

$$\mathbf{y}^R(i){=}\mathbf{d}^R(i)\mathbf{M}{+}\mathbf{n}^R(i) \qquad (15)$$

$$\mathbf{y}^I(i){=}\mathbf{d}^I(i)\mathbf{M}{+}\mathbf{n}^I(i) \qquad (16)$$

où $\mathbf{y}^R(i),\mathbf{d}^R(i),\mathbf{n}^k(i)$ (resp. $\mathbf{y}^I(i),\mathbf{d}^I(i),\mathbf{n}^I(i)$ )) sont les vecteurs constitués des parties réelles (resp. des parties imaginaires) des composantes de $\mathbf{y}(i),\mathbf{d}(i),\mathbf{n}(i)$ ;

$\mathbf{M}{=}\mathbf{AR}$ où $\mathbf{R}$ est la matrice constituée par les coefficients $R_{lk}{=}\int_0^T s_l(t)s_k(t)\mathrm{d}t$ et $\mathbf{A}$ est le vecteur des amplitudes des $K$ utilisateurs. Les vecteurs d'observation $\mathbf{y}^R(i)$ et $\mathbf{y}^I(i)$ appartiennent à $\mathbf{R}^K$. Après transformation éventuelle selon une relation du type de celle de (12), les vecteurs $\mathbf{y}^R(i)$ et $\mathbf{y}^I(i)$ peuvent être considérés comme des points d'un réseau A de matrice génératrice $\mathbf{M}$ corrompus par du bruit.

On montre aisément que les vecteurs de bruit $\mathbf{n}^R(i)$ et $\mathbf{n}^I(i)$ ont tous deux pour matrice de covariance $N_0.\mathbf{R}(i)$. $\mathbf{R}$ étant une matrice symétrique définie positive on peut la factoriser selon une décomposition de Cholesky : $\mathbf{R} = \mathbf{WW}^T$ où $\mathbf{W}$ est une matrice réelle triangulaire inférieure de taille $K$x$K$. Afin de décorréler les composantes de bruit, les vecteurs d'observation réels $\mathbf{y}^R(i)$ et $\mathbf{y}^I(i)$ sont tout d'abord soumis à une opération de blanchiment :

$$\tilde{\mathbf{y}}^R(i){=}\mathbf{y}^R(i)\mathbf{W}^{T^{-1}} \qquad (17)$$

$$\tilde{\mathbf{y}}^I(i){=}\mathbf{y}^I(i)\mathbf{W}^{T^{-1}} \qquad (18)$$

Dans un deuxième temps, on recherche les plus proches voisins des vecteurs $\tilde{\mathbf{y}}^R(i)$ et $\tilde{\mathbf{y}}^I(i)$ appartenant au réseau de points $\Omega$ constitué des vecteurs $\tilde{\mathbf{x}}(i){=}\mathbf{x}(i)\mathbf{W}^{T\text{-}1}$ où $\mathbf{x}(i)$ appartient à $\Lambda$. On notera que la matrice génératrice du réseau $\Omega$ est égale à $\mathbf{AW}$, matrice réelle triangulaire inférieure. D'autre part, on peut montrer facilement, qu'après blanchiment, les matrices de covariance des bruits filtrés $\mathbf{n}^R(i)\mathbf{W}^{T\text{-}1}$ et $\mathbf{n}^I(i)\mathbf{W}^{T\text{-}1}$ sont toutes deux égales à $N_0\mathbf{I}_K$ où $\mathbf{I}_K$ est la matrice identité de dimension $K$.

Lorsque les symboles de ou pour les utilisateurs sont transmis de manière asynchrone, la modélisation du système est plus complexe car il faut tenir compte du fait qu'un symbole d'un utilisateur peut interférer avec deux voire plusieurs symboles consécutifs d'un autre utilisateur. On montre dans ce cas que l'on peut se ramener à une recherche du plus proche voisin au sein d'un réseau de dimension 2.$K'$ ($K'$ dans le cas de signatures réelles) avec $K'$>$K$ où $K'$ est fonction du nombre de symboles non encore estimés pouvant interférer entre eux. La détection n'est toutefois pas optimale au sens du maximum de vraisemblance.

Dans tous les cas, le problème est de déterminer le point $\mathbf{x}$ d'un réseau $\Xi$ de dimension $\kappa$ le plus proche du vecteur reçu et blanchi $\tilde{\mathbf{y}}$, ce qui revient à minimiser la métrique

$$m(\tilde{\mathbf{y}}/\mathbf{x}){=}\sum_{i=1}^{\kappa}|\tilde{y}_i{-}x_i|^2{=}\|\tilde{\mathbf{y}}{-}\mathbf{x}\|^2 \qquad (19)$$

où $\tilde{\mathbf{y}}{=}\mathbf{x}{+}\eta$, $\eta{=}(\eta_l,...,\eta_\kappa)$ est le vecteur de bruit et $\mathbf{x}{=}(\chi_l,...,\chi_\kappa)$ est un point appartenant au réseau. Le vecteur de bruit $\eta$ a des composantes réelles indépendantes suivant une distribution gaussienne de moyenne nulle et de variance $N_0$.

On notera que le vecteur $\mathbf{y}(i)$ n'a pas besoin d'être blanchi si l'on utilise une métrique basée sur la matrice de covariance :

$$m(\mathbf{y}/\mathbf{x}){=}(\mathbf{y}{-}\mathbf{x})\mathbf{R}^{-1}(\mathbf{y}{-}\mathbf{x})^T \qquad (19')$$

On désignera par la suite, pour des raisons de simplification, $\mathbf{z}$ le vecteur d'observation blanchi ($\tilde{\mathbf{y}}(i)$) ou non

($\mathbf{y}(i)$) et on limitera les développements ci-après à la métrique définie en (19).

Les points du réseau $\Xi$ peuvent être décrits par les vecteurs $\mathbf{x}=\mathbf{bG}$ où $\mathbf{b}=(b_1,...,b_\kappa)$ possède des composantes $b_i$ appartenant à l'anneau des entiers $\mathbf{Z}$ et où $\mathbf{G}$ est la matrice génératrice du réseau. On note $\{\mathbf{v}_1,\mathbf{v}_2,...,\mathbf{v}_\kappa\}$ les lignes de la matrice $\mathbf{G}$. Par définition ces vecteurs forment une base du réseau.

L'ensemble des symboles émis est limité à un alphabet de taille finie $\mathbf{A}_\kappa \subset \mathbf{Z}^\kappa$ appelé constellation. Cette constellation est déterminée par les constellations de modulation utilisées par (ou pour) les $\kappa$ utilisateurs et le cardinal de l'alphabet $A_\kappa$ est le produit des cardinaux des différents alphabets de modulation. On supposera que les points complexes de chacune de ces constellations possèdent des valeurs réelles et des valeurs imaginaires régulièrement réparties.

Comme on l'a vu un décodage exhaustif nécessiterait une recherche du plus proche voisin dans la totalité de $\mathbf{A}_\kappa$. Le décodeur restreint avantageusement son calcul aux points qui sont situés à l'intérieur d'une zone de la constellation située autour du point reçu, préférentiellement à l'intérieur d'une sphère de rayon donné $\sqrt{C}$ centrée sur le point reçu comme représenté en Fig. 1. Seuls les points du réseau situés à une distance quadratique inférieure à $C$ du point reçu sont donc considérés pour la minimisation de la métrique (19).

En pratique, le décodeur effectue la minimisation suivante :

$$\min_{\mathbf{x} \in \Xi}\|\mathbf{z}-\mathbf{x}\| = \min_{\mathbf{w} \in \mathbf{z}-\Xi}\|\mathbf{w}\| \qquad (20)$$

Pour ce faire, le décodeur recherche le plus petit vecteur $\mathbf{w}$ dans l'ensemble translaté $\mathbf{z}-\Xi$. On peut exprimer les vecteurs $\mathbf{z}$ et $\mathbf{w}$ comme :

$$\mathbf{z}=\rho\mathbf{G} \qquad \text{avec} \qquad \rho=(\rho_1,...,\rho_\kappa)$$
$$\mathbf{w}=\xi\mathbf{G} \qquad \text{avec} \qquad \xi=(\xi_1,...\xi_\kappa) \qquad (21)$$

Il est important de noter que $\rho$ et $\xi$ sont des vecteurs réels. Comme $\mathbf{w}=\mathbf{z}-\mathbf{x}$ où $\mathbf{x}$ appartient au réseau $\Xi$, on a la relation $\xi_i = \rho_i - b_i$ pour $i=1,...,\kappa$ avec $\mathbf{w}=\sum_{i=1}^{\kappa}\xi_i\mathbf{v}_i$.

Le vecteur $\mathbf{w}$ est un point du réseau dont les coordonnées $\xi_i$ sont exprimées dans le repère translaté centré sur le point reçu. Le vecteur $\mathbf{w}$ appartient à une sphère de rayon quadratique $C$ centrée en $\mathbf{0}$ si :

$$\|\mathbf{w}\|^2 = Q(\xi) = \xi\mathbf{G}\mathbf{G}^T\xi^T \leq C \qquad (22)$$

Dans le nouveau système de coordonnées défini par $\xi$, la sphère de rayon quadratique $C$ centrée en $\mathbf{y}$ est donc transformée en un ellipsoïde centré sur l'origine. La factorisation de Cholesky de la matrice de Gram $\Gamma=\mathbf{G}\mathbf{G}^T$ donne $\Gamma=\Delta\Delta^T$, où $\Delta$ est une matrice triangulaire inférieure d'éléments $\delta_{ij}$.

Notons que si l'on avait utilisé la métrique définie par (19'), sans blanchiment préalable de $\mathbf{y}$, la matrice de Gram $\Gamma$ devrait être remplacée par la matrice $\mathbf{G}\mathbf{R}^{-1}\mathbf{G}^T$, matrice symétrique définie positive et donc susceptible d'une factorisation de Cholesky.

Il faut également noter que si le vecteur $\mathbf{y}$ a été blanchi, il n'y a pas lieu d'effectuer la factorisation de Cholesky car la matrice génératrice du réseau est déjà triangulaire inférieure.

Dans le cas où l'on n'a pas procédé au blanchiment préalable la décomposition de Cholesky est nécessaire :

$$Q(\xi) = \xi\Delta\Delta^T\xi^T = \|\Delta^T\xi^T\|^2 = \sum_{i=1}^{\kappa}\left(\delta_{ii}\xi_i + \sum_{j=i+1}^{\kappa}\delta_{ji}\xi_j\right)^2 \leq C \qquad (23)$$

En posant

$$q_{ii} = \delta_{ii}^2 \text{ pour } i = 1, \ldots, \kappa$$

$$q_{ij} = \frac{\delta_{ij}}{\delta_{jj}} \text{ pour } j = 1, \ldots, \kappa; i = j+1, \ldots, \kappa \qquad (24)$$

on obtient

$$Q(\xi) = \sum_{i=1}^{\kappa} q_{ii} \left( \xi_i + \sum_{j=i+1}^{\kappa} q_{ji} \xi_j \right)^2 \qquad (25)$$

En s'intéressant tout d'abord à la plage de variations possibles de $\xi_\kappa$, puis en rajoutant une à une les composantes, on obtient les $\kappa$ inégalités suivantes, qui définissent tous les points à l'intérieur de l'ellipsoïde :

$$q_{\kappa\kappa} \xi_\kappa^2 \leq C$$

$$q_{\kappa-1,\kappa-1} \left( \xi_{\kappa-1} + q_{\kappa,\kappa-1} \xi_\kappa \right)^2 + q_{\kappa\kappa} \xi_\kappa^2 \leq C \qquad (26)$$

$$\forall \ell \in \{1; \kappa\}, \sum_{i=\ell}^{\kappa} q_{ii} \left( \xi_i + \sum_{j=i+1}^{\kappa} q_{ji} \xi_j \right)^2 \leq C$$

On peut montrer que les inégalités (26) imposent aux composantes entières de **b** de satisfaire à :

$$\left\lceil -\sqrt{\frac{C}{q_{\kappa\kappa}}} + \rho_\kappa \right\rceil \leq b_\kappa \leq \left\lfloor \sqrt{\frac{C}{q_{\kappa\kappa}}} + \rho_\kappa \right\rfloor$$

$$\left\lceil -\sqrt{\frac{C - q_{\kappa\kappa} \xi_\kappa^2}{q_{\kappa-1,\kappa-1}}} + \rho_{\kappa-1} + q_{\kappa,\kappa-1} \xi_\kappa \right\rceil \leq b_{\kappa-1} \leq \left\lfloor -\sqrt{\frac{C - q_{\kappa\kappa} \xi_\kappa^2}{q_{\kappa-1,\kappa-1}}} + \rho_{\kappa-1} + q_{\kappa,\kappa-1} \xi_\kappa \right\rfloor$$

$$\left\lceil -\sqrt{\frac{1}{q_{ii}} \left( C - \sum_{\ell=i+1}^{\kappa} q_{\ell\ell} \left( \xi_\ell + \sum_{j=\ell+1}^{\kappa} q_{j\ell} \xi_j \right)^2 \right)} + \rho_i + \sum_{j=i+1}^{\kappa} q_{ji} \xi_j \right\rceil \leq b_i \qquad (27)$$

$$b_i \leq \left\lfloor \sqrt{\frac{1}{q_{ii}} \left( C - \sum_{\ell=i+1}^{\kappa} q_{\ell\ell} \left( \xi_\ell + \sum_{j=\ell+1}^{\kappa} q_{j\ell} \xi_j \right)^2 \right)} + \rho_i + \sum_{j=i+1}^{\kappa} q_{ji} \xi_j \right\rfloor$$

où $\lceil x \rceil$ est le plus petit entier supérieur au réel $x$ et $\lfloor x \rfloor$ est le plus grand entier inférieur au réel $x$.

Le décodeur possède $\kappa$ compteurs internes, à savoir un compteur par dimension, chaque compteur comptant entre une borne inférieure et supérieure comme indiqué en (27), étant entendu qu'à chaque compteur est associé un couple de bornes particulier. En pratique ces bornes peuvent être mises à jour de manière récursive. On pose :

$$S_i = S_i(\xi_{i+1}, \ldots, \xi_\kappa) = \rho_i + \sum_{j=i+1}^{\kappa} q_{ji} \xi_j \qquad (28)$$

$$T_{i-1}=T_{i-1}(\xi_i,\ldots,\xi_K)=C-\sum_{\ell=i}^{K}q_{\ell\ell}\left(\xi_\ell+\sum_{j=\ell+1}^{K}q_{j\ell}\xi_j\right)^2=T_i-q_{ii}(\xi_i+S_i-\rho_i)^2 \qquad (29)$$

$$T_{i-1} = T_i - q_{ii}(S_i - b_i)^2 \qquad (30)$$

avec $T_K=C$

A l'aide des équations (28) à (30), on détermine récursivement la plage de variation de chaque composante $b_i$ en commençant par la composante $b_K$ :

$$L_i^-\leq b_i\leq L_i^+ \qquad (31)$$

avec

$$L_i^-=\left\lceil -\sqrt{\frac{T_i}{q_{ii}}}+S_i\right\rceil \text{ et } L_i^+=\left\lfloor \sqrt{\frac{T_i}{q_{ii}}}+S_i\right\rfloor \qquad (32)$$

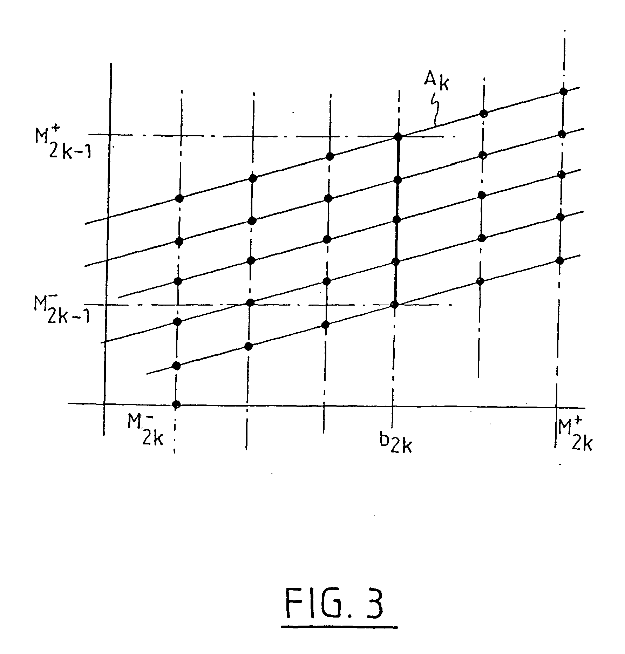

On restreint avantageusement les plages de variation définies par (32) de manière à ne pas tester inutilement des points qui sont situés hors de la constellation. On rappelle que chaque utilisateur $k$ utilise une constellation de symboles $\mathbf{A}_k$, chaque symbole de la constellation étant un nombre complexe dont les parties réelle et imaginaire (éventuellement après transformation affine) sont des éléments de $\mathbf{Z}$. Plaçons nous tout d'abord dans le cas général où le réseau est de dimension 2K, où $K$ est le nombre d'utilisateurs. Pour chaque utilisateur $k$, on considère les dimensions $2k$ et $2k$-1 portant le symbole complexe transmis par ou pour l'utilisateur $k$. Comme indiqué en Fig. 3, la constellation, ou de manière équivalente la constellation de modulation de l'utilisateur $k$ est tout d'abord projetée sur la dimension $2k$.

Cette projection définit un intervalle $\left[M_{2k}^-,M_{2k}^+\right]$. On définit alors l'intervalle de recherche $[B_{2k}^-,B_{2k}^+]$ où :

$$B_{2k}^-=Sup(L_{2k}^-,M_{2k}^-) \text{ et } B_{2k}^+=Inf(L_{2k}^+,M_{2k}^+) \qquad (33)$$

et l'on choisit un entier $b_{2k}$ dans cet intervalle. La composante $b_{2k}$ définit alors un intervalle $\left[M_{2k-1}^-,M_{2k-1}^+\right]$ pour la composante $b_{2k-1}$ comme indiqué sur la Fig. 3. On définit ensuite un intervalle de recherche $[B_{2k-1}^-,B_{2k-1}^+]$ par :

$$B_{2k-1}^-=Sup(L_{2k-1}^-,M_{2k-1}^-) \text{ et } B_{2k-1}^+=Inf(L_{2k-1}^+,M_{2k-1}^+) \qquad (33')$$

En procédant de la sorte on est assuré de ne rechercher le plus proche voisin que parmi des candidats qui sont à la fois situés dans la sphère de recherche et des points de la constellation.

La situation est légèrement différente lorsque l'on utilise des séquences d'étalement réelles et donc lorsque le réseau est de dimension $K$ (où $K$ est le nombre d'utilisateurs). Dans ce cas, les valeurs réelle et imaginaire des symboles font l'objet de recherches parallèles dans un réseau $(\Lambda, \Omega)$ de dimension $K$. Le calcul des bornes de recherche (et le choix des valeurs des valeurs des composantes) porte tour à tour sur la partie réelle et la partie imaginaire, de manière entrelacée.

Dans l'exemple simple où la modulation employée sur une dimension $i$ est une modulation PAM d'ordre $M$, la coordonnée entière $b_i$ du point recherché doit être comprise entre 0 et $M$ - 1. Les bornes de recherche sont ajustées par $B_i^-=Sup(L_i^-,0)$ et $B_i^+=Inf(L_i^+,M-1)$ de manière à ce que le compteur associé à la composante $b_i$ ne parcoure

pas des points qui sont situés en dehors de la sphère de recherche ou en dehors de la constellation. Cet ajustement des bornes de recherche permet d'accélérer considérablement l'algorithme de détection par sphères.

Un problème survient lorsque le vecteur reçu est situé en dehors de la constellation, par exemple parce que le bruit sur une ou plusieurs des liaisons est élevé. Si l'on utilise une détection par sphères classique, la sphère de recherche risque de ne contenir aucun point de la constellation. De même, si l'on utilise une détection par sphères limitée à la constellation, l'intervalle de recherche $[B_i^-, B_i^+]$ risque d'être vide pour certaines dimensions $i$ parce que $L_i^- < M_i^-$ ou bien $L_i^- > M_i^+$. Dans les deux cas, il faut augmenter le rayon de la sphère jusqu'à trouver un point de la constellation, ce qui peut entraîner de nombreuses étapes de recherche inutiles et donc considérablement ralentir l'algorithme.

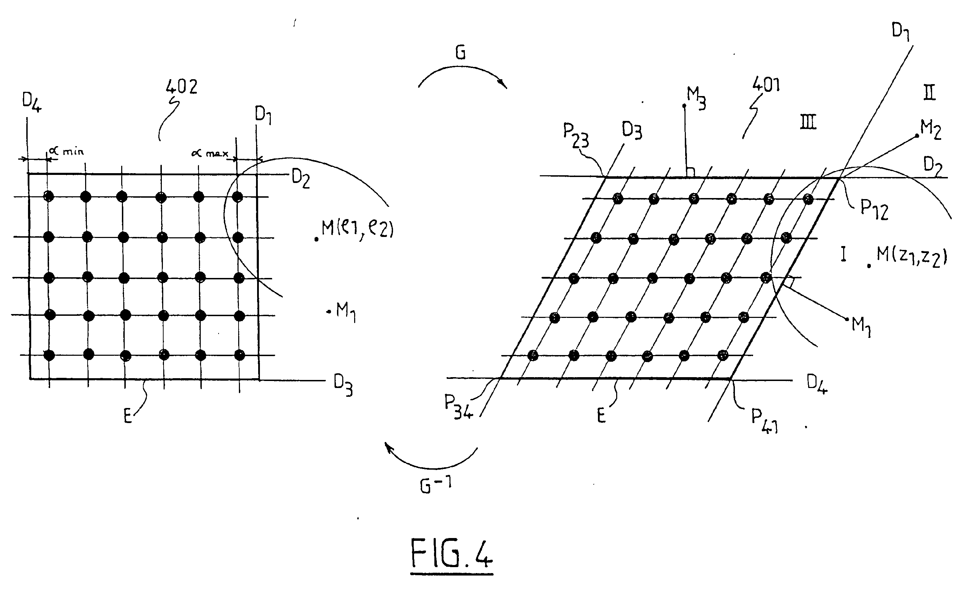

Lorsque la constellation a une forme parallélépipédique, par exemple lorsque les constellations de modulation des différents utilisateurs sont de type PAM ou QAM, la présente invention propose de projeter orthogonalement le point reçu sur un sous-espace affine (ou variété linéaire) délimitant ou bordant la constellation. La Fig. 4 représente schématiquement une constellation en forme de parallélogramme (ici $\kappa=2$), à droite (401) dans la base canonique de l'espace euclidien $\mathbf{R}^\kappa$ et à gauche (402) dans la base des vecteurs générateurs du réseau. On rappelle qu'un point reçu est représenté par un vecteur $\mathbf{z}$ dans la base canonique et par un vecteur $\rho$ dans la base génératrice, tel que $\mathbf{z}=\rho\mathbf{G}$.

Dans la représentation 401, l'espace $\mathbf{R}^\kappa$ est muni de la norme euclidienne $\|\mathbf{z}\|^2 = \sum_{i=1}^{\kappa} z_i^2$ et en 402 de la norme $Q(\rho)$ $=\rho\mathbf{G}\mathbf{G}^T\rho^T$. Ainsi une sphère centrée sur le point reçu $\mathbf{z}$ dans la représentation en 401 est transformée en un ellipsoïde centré sur le point reçu $\rho$ en 402. Comme illustré en 401, un point reçu n'appartenant pas à la constellation est d'abord projeté orthogonalement sur cette dernière ou plus généralement sur une enveloppe $E$ de cette constellation. Le choix du sous-espace affine sur lequel l'on effectue la projection dépend de la position du point reçu. Ainsi par exemple le point $M_1$ appartenant à la zone I délimitée par les droites $D_1, D_2, D_4$ est projeté sur la droite $D_1$, le point $M_2$ appartenant au secteur II délimité par les droites $D_1$ et $D_2$ est « projeté » sur le sommet $P_{12}$ (c'est-à-dire que l'image de tout point appartenant à ce secteur sera le point $P_{12}$), le point $M_3$ appartenant à la zone III délimitée par les droites $D_2, D_1, D_3$ est projeté sur la droite $D_2$, etc. Comme nous le verrons plus loin, ce choix de projection est sous-optimal. Il est cependant préféré pour sa facilité d'implémentation. Bien entendu, les différents types de sous-espaces affines sur lesquels on peut effectuer une projection dépendent de la dimension du réseau. Ainsi pour une constellation parallélépipédique générant un réseau de dimension 3, les sous-espaces affines à considérer seront les faces, les arêtes et les sommets du parallélépipède. De manière générale, pour un réseau de dimension $\kappa$, les sous-espaces affines à considérer seront de dimension $N=\kappa-L$ avec $1\leq L\leq\kappa$.

La projection est plus facile à réaliser dans la représentation 402. En effet, si l'on note $\beta_t$ les coordonnées d'un point dans la base des vecteurs générateurs du réseau, les droites $D_i$ sont définies par les équations :

$$\beta_\ell = \beta_{\min,t} = M_t^- - \alpha_{\min,\ell} \text{ ou bien } \beta_\ell = \beta_{\max,t} = M_t^+ + \alpha_{\max,t} \qquad (34)$$

où $\alpha_{\min,\ell}$ et $\alpha_{\max,\ell}$ sont des valeurs réelles positives définissant les marges entre la constellation et son enveloppe. On pourra prendre les valeurs de $\alpha_{\min,\ell}$ et $\alpha_{\max,\ell}$ égales à une même valeur $\alpha$. Cette valeur peut en outre être choisie nulle si l'on souhaite effectuer directement la projection sur la constellation.

Dans le cas général d'un réseau de dimension $\kappa$ quelconque, les sous-espaces affines à considérer sont définis par $L$ relations du type (34). Soit $T^0$ un tel sous-espace: tout point appartenant à ce sous-espace possède $L$ coordonnées fixées par des relations du type (34). On peut supposer sans perte de généralité que ces $L$ coordonnées sont les $L$ premières et qu'elles sont fixées à la valeur maximale $\beta_{\max,\ell}$, c'est-à-dire que l'on a $\rho_\ell \geq \beta_{\max,\ell}$, $\ell=1,..,L$.

Soit $\mathbf{z}^P=\rho^P\mathbf{G}$ la projection sur le sous-espace affine de dimension $N$ du vecteur reçu $\mathbf{z}$. D'après (34) les coordonnées de $\rho^P$ sont telles que $\rho_t^P = \beta_{\max,\ell}$, $\ell=1,...,L$. On peut donc écrire

$$\mathbf{z}^P = \rho^P\mathbf{G} = \rho^0\mathbf{B}^0 + \mathbf{k}.\mathbf{B} = \mathbf{z}^0 + \mathbf{k}.\mathbf{B} \qquad (35)$$

où $\rho^0=(\beta_{\max,1},...,\beta_{\max,L})$ est un vecteur ligne de dimension $L$, $\mathbf{z}^0$ un vecteur ligne de dimension $\kappa$, $\mathbf{k}$ un vecteur ligne de dimension $N$ représentant les coordonnées libres du sous-espace vectoriel $T$ associé au sous-espace affine $T^0$, $\mathbf{B}^0$ une matrice de taille ($L\times\kappa$) contenant les $L$ premières lignes de $\mathbf{G}$ et $\mathbf{B}$ une matrice de taille ($N\times\kappa$), qui contient les $N$ dernières lignes de **G** formant une base du sous-espace vectoriel *T*.

Autrement dit, on a

$$\mathbf{G} = \begin{bmatrix} \mathbf{B^0} \\ \mathbf{B} \end{bmatrix} \tag{35}$$

La matrice **G** étant de rang $\kappa$, la matrice **B** est elle même de rang *N*, on peut donc définir la matrice pseudo-inverse B' de **B.** On se ramène au sous-espace vectoriel *T* par simple translation, en posant :

$$\begin{aligned} \widetilde{\mathbf{z}}^{\mathbf{P}} &= \mathbf{z}^{\mathbf{P}} - \mathbf{z}^{\mathbf{0}} \\ \widetilde{\mathbf{z}} &= \mathbf{z} - \mathbf{z}^{\mathbf{0}} \end{aligned} \tag{36}$$

On a alors :

$$\begin{aligned} \widetilde{\mathbf{z}}^{\mathbf{P}} &= \mathbf{k}.\mathbf{B} = \widetilde{\mathbf{z}}.\mathbf{B}^{+}.\mathbf{B} = \widetilde{\mathbf{z}}.\mathbf{B}^{\mathbf{H}} \left( \mathbf{B}.\mathbf{B}^{\mathbf{H}} \right)^{-1}.\mathbf{B} \\ \mathbf{z}^{\mathbf{P}} &= \left( \mathbf{z} - \mathbf{z}^{\mathbf{0}} \right) \mathbf{B}^{\mathbf{H}} \left( \mathbf{B}.\mathbf{B}^{\mathbf{H}} \right)^{-1}.\mathbf{B} + \mathbf{z}^{\mathbf{0}} \end{aligned} \tag{37}$$

Le point correspondant au vecteur $\mathbf{z}^P$ est proche de la constellation et sa détection sera donc beaucoup plus rapide que celle du point initial. Le gain en rapidité de détection est surtout appréciable pour les faibles rapports signal à bruit.

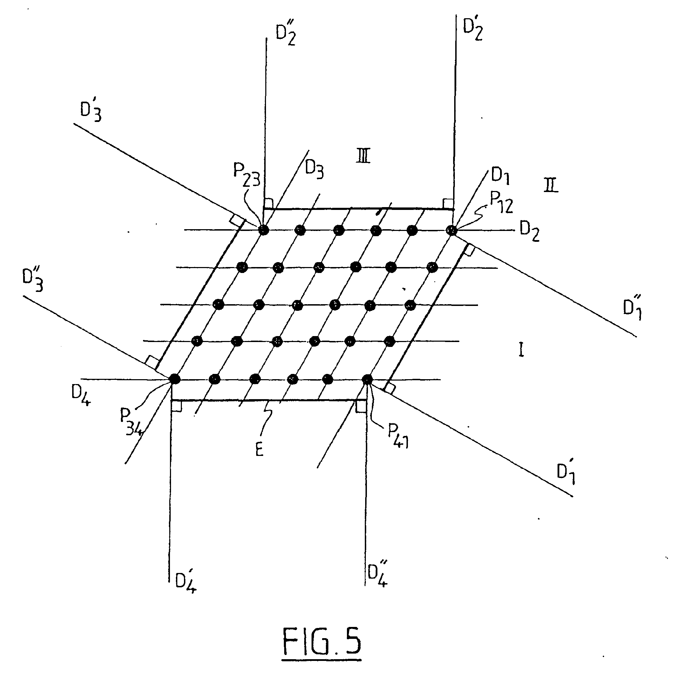

Comme on l'a mentionné plus haut, le choix de projection est sous-optimal. Le choix optimal correspondrait en fait à celui illustré en Fig. 5. Les zones de choix sont délimitées par des droites orthogonales aux droites délimitant la constellation. Ainsi, les points de la zone I délimitée par les droites D'$_1$ et D"$_1$ sont projetés sur la droite D$_1$, les points du secteur II délimité par les droites D"$_1$ et D'$_2$ sont « projetés » sur le point P$_{12}$, les points de la zone III délimitée par les droites D'$_2$ et D"$_2$ sont projetés sur la droite D$_2$, etc. On a également représenté sur la Fig. 5 une enveloppe *E* de la constellation qui correspondrait à ce critère. Bien entendu, ce dernier se généralise à un réseau de dimension quelconque. Ainsi, pour une constellation parallélépipédique d'un réseau de dimension 3, le choix optimal correspondrait à une projection orthogonale sur une enveloppe polyédrique, le polyèdre étant en fait un parallélépipède de faces parallèles à celles de constellation et dont tous les angles sont biseautés.

Selon un second mode de réalisation de l'invention, on effectue la projection orthogonale du point reçu directement sur un sous-espace affine délimitant la constellation (par exemple sur l'une des droites D$_1$,D$_2$,D$_3$,D$_4$ ou l'un des points P$_{12}$,P$_{23}$,P$_{34}$,P$_{41}$ dans le cas de la Fig. 4) et l'on procède ensuite à une détection par sphères à l'intérieur ce sous-espace affine, l'avantage étant de travailler dans un espace de dimension *N* plus faible que la dimension $\kappa$ du réseau. Pour effectuer le décodage dans le réseau contenu dans le sous-espace affine, il faut projeter le point reçu directement sur le sous espace-affine. On peut néanmoins décider de n'effectuer la projection que si le point reçu est suffisamment loin de la constellation. Les conditions de choix de projection sont donc les mêmes que précédemment.

Nous montrerons tout d'abord que les points du réseau $\Lambda$ de $\mathbf{R}^\kappa$ contenus dans le sous-espace affine de projection, peuvent être modélisés par des points d'un réseau $\Lambda'$ de $\mathbf{R}^N$. Une telle modélisation permet d'effectuer le décodage par sphères dans un espace de dimension $N \leq \kappa$ et d'accélérer la détection.

S'il existe *L* dimensions telles que $\rho_\ell \leq \beta_\ell^-$ ou $\rho_\ell \geq \beta_\ell^+$ , on fixe ces valeurs de $\rho_\ell$ à $M_\ell^-$ ou $M_\ell^+$ selon les cas et l'on projette le point reçu sur le sous-espace affine de dimension $N = \kappa - L$ correspondant. Sans perte de généralité, on peut faire l'hypothèse que ces *L* coordonnées fixées sont les *L* premières et sont toutes fixées à la valeur maximale $M_\ell^+$ . On a donc $\rho_\ell \geq \beta_\ell^+$ pour $\ell = 1,..,L$.

Soit $\mathbf{z}^P = \rho^P \mathbf{G}$ la projection sur le sous-espace affine de dimension *N* du vecteur reçu **z**. D'après le critère de projection $\rho^P$ est tel que $\rho_\ell^P = M_\ell^+$ pour $\ell = 1,..,L$ . On peut donc écrire :

$$\mathbf{z^P=bG+n=b^0B^0+\widetilde{b}^PB+n} \tag{38}$$

où $\mathbf{b^0}=(M\dot{\mathbf{1}},..,M\dot{\mathbf{i}})\in\mathbf{Z}^l$, $\widetilde{\mathbf{b}}^P=(b_{L+1},...,b_\kappa)\in\mathbf{Z}^N$, $B^0$ est une matrice de taille ($L\times\kappa$) et $\mathbf{B}$ une matrice de taille ($N\times\kappa$) définies comme précédemment et $\mathbf{n}$ est un vecteur de bruit.

La simplification de la détection présentée dans cette section suppose que le point finalement détecté appartient au sous-espace affine sur laquelle on a projeté le point reçu $\mathbf{z}$. Les $L$ premières composantes du vecteur détecté seront donc égales à celles du vecteur $\mathbf{b}^0$. On s'intéresse donc maintenant uniquement à la détection du vecteur ligne $\widetilde{\mathbf{z}}^P$ appartenant au sous-espace vectoriel $T$ et obtenu par soustraction du vecteur constant $\mathbf{z}^0=\mathbf{b}^0B$ :

$$\widetilde{\mathbf{z}}^P=\mathbf{z}^P-\mathbf{z}^0=\widetilde{\mathbf{b}}^P\mathbf{B}+\mathbf{n} \tag{39}$$

La matrice $\mathbf{B}$ contient $N$ vecteurs de base de taille $\kappa$. $\widetilde{\mathbf{z}}^P$ est donc un point bruité d'un réseau $\Lambda'$ de dimension $N$ de $\mathbf{R}^\kappa$. Pour que la méthode de détection par sphères soit directement applicable, il faut que le vecteur observé soit un point bruité d'un réseau de dimension $N$ dans l'espace $\mathbf{R}^N$. Il faut donc trouver une matrice $\mathbf{B}^{Pl}$ contenant $N$ vecteurs de base de taille $N$ et générant un réseau équivalent à celui généré par $\mathbf{B}$ dans $\mathbf{R}^\kappa$. Soit $\mathbf{B}^{P'}$ la matrice de taille ($N \times N$) obtenue par décomposition de Cholesky de la matrice de Gram $\mathbf{BB}^T$. Cette décomposition garantit que:

$$\mathbf{BB}^T = \mathbf{B^{P'}B^{P'}}^T \tag{40}$$

Les deux matrices $\mathbf{B}^{Pl}$ et $\mathbf{B}$ ont la même matrice de Gram et donc la norme définie par la relation (22) est la même dans les deux cas. En outre, la matrice $\mathbf{B}^{Pl}$ est triangulaire inférieure. Cette particularité permet de faire l'économie de la décomposition de Cholesky normalement effectuée en début de la détection par sphères.

Soit $\mathbf{U}$ la matrice de passage de taille ($\kappa\times N$) telle $\mathbf{B}^{Pl}=\mathbf{BU}$.

Montrons que $\mathbf{U} = \mathbf{B}^T (\mathbf{B}^{Pl-1})^T$. En effet, on obtient d'après (40) :

$$\mathbf{BU=BB}^T\left(\mathbf{B}^{P_l-1}\right)^T=\mathbf{B^{P_l}B^{P_l}}^T\left(\mathbf{B}^{P_l-1}\right)^T=\mathbf{B}^{P_l} \tag{41}$$

Si on note $\mathbf{x}^P=\widetilde{\mathbf{b}}^P\mathbf{B}$ le vecteur ligne de taille $\kappa$ représentant un point du réseau $\Lambda'$ dans $\mathbf{R}^K$, alors $\widetilde{\mathbf{x}}^P$ le vecteur ligne de taille $N$ représentant un point du réseau dans $\mathbf{R}^N$ s'obtient par :

$$\widetilde{\mathbf{x}}^P=\mathbf{x}^P\mathbf{U}=\widetilde{\mathbf{b}}^P\mathbf{BU}=\widetilde{\mathbf{b}}^P\mathbf{B}^{P_l} \tag{42}$$

On doit donc faire subir à $\widetilde{\mathbf{z}}^P$ la même transformation avant détection, à savoir :

$$\widetilde{\mathbf{z}}^P\mathbf{U}=\left(\widetilde{\mathbf{b}}^P\mathbf{B}+\mathbf{n}\right)\mathbf{U}=\widetilde{\mathbf{b}}^P\mathbf{B}^{P_l}+\mathbf{n'} \tag{43}$$

La matrice de covariance du vecteur de bruit $\mathbf{n'}$ est la suivante :

$$E\left[\mathbf{n'}^T\mathbf{n'}\right]=\mathbf{U}^T E\left[\mathbf{n}^T\mathbf{n}\right]\mathbf{U}=N_0\mathbf{U}^T\mathbf{U} \tag{44}$$

soit encore, grâce à l'expression de **U** :

$$E\left[\mathbf{n'}^T \mathbf{n'}\right] = N_0 \mathbf{B}^{P_r-1} \mathbf{B} \mathbf{B}^T \left(\mathbf{B}^{P_r-1}\right)^T = N_0 \mathbf{B}^{P_r-1} \mathbf{B}^{P_r} \mathbf{B}^{P_r T} \left(\mathbf{B}^{P_r-1}\right)^T = N_0 \mathbf{I}_N \qquad (45)$$

Aucun blanchiment supplémentaire du bruit n'est donc nécessaire après projection.

Les coordonnées entières non fixées (les coordonnées fixées sont données par $\mathbf{b}^0$) sont regroupées dans $\tilde{\mathbf{b}}^P$ et obtenues par une détection par sphères du vecteur $\tilde{\mathbf{z}}^P \mathbf{U}$.

Bien que l'invention ait été exposée dans le contexte d'un système de télécommunication mobile DS-CDMA, elle s'applique également à un système de télécommunication mobile MC-CDMA (*Multi-Carrier Code Division Multiple Access*).

Rappelons que la technique MC-CDMA combine la modulation OFDM (*Orthogonal Frequency Division Multiplex*) et la technique d'accès multiple CDMA. Contrairement à la méthode DS-CDMA dans laquelle le signal de chaque utilisateur est multiplié dans le domaine temporel pour étaler son spectre fréquentiel, la signature multiplie ici le signal dans le domaine fréquentiel, chaque élément de la signature multipliant le signal d'une sous-porteuse différente.

A la réception les échantillons du signal reçu sont soumis à une FFT et les signaux relatifs aux différentes sous-porteuses sont ensuite filtrés par un filtrage adapté à la signature de l'utilisateur et au canal de transmission.

On a montré dans la demande française N° 0016351 déposée le 13.12.2000 par la demanderesse et incorporée ici par référence que si l'on note $\mathbf{r}(i) = (r_l(i),..., ,r_L(i))$ le vecteur des signaux reçus sur les $L$ différentes sous-porteuses et $\mathbf{d}(i)=(d_l(i),...,d_K(i))$ le vecteur des $K$ symboles émis par ou pour les $\kappa$ différents utilisateurs à l'instant $i$, on pouvait écrire dans le cas où les utilisateurs sont reçus de manière synchrone :

$$\mathbf{r}(i)=\mathbf{d}(i)\mathbf{A}\mathbf{C}(i)+\eta(i) \qquad (46)$$

où $\mathbf{C}(i)$ est une matrice traduisant l'étalement par les signatures des différents utilisateurs et l'effet des différents canaux de transmission, $\eta(i) = (\eta_l(i),...,\eta_L(i))$ est un vecteur de bruit blanc additif gaussien et $\mathbf{A}$ est une matrice diagonale **Diag** $(\alpha_1,...,\alpha_K)$ formée par les amplitudes des signaux des ou pour les différents utilisateurs.

Comme indiqué dans la demande susmentionnée, on peut montrer que la connaissance du vecteur d'observation $\mathbf{y}(i)= (y_l(i),..., y_K(i))$ où :

$$\mathbf{y}(i)=\mathbf{r}(i)\mathbf{C}^H(i) \qquad (47)$$

est suffisante pour permettre la détection au sens du maximum de vraisemblance du vecteur émis $\mathbf{d}(i)$.

On en déduit que le vecteur d'observation peut s'exprimer sous la forme:

$$\mathbf{y}(i)=\mathbf{d}(i)\mathbf{A}\mathbf{C}(i)\mathbf{C}^H(i)+\mathbf{n}(i)=\mathbf{d}(i)\mathbf{M}(i)+\mathbf{n}(i) \qquad (48)$$

où n(i) est un vecteur de bruit coloré et $\mathbf{M}(i)=\mathbf{C}(i)\mathbf{C}^H(i)$.

Les vecteurs $\mathbf{y}(i)$, $\mathbf{d}(i)$, $\mathbf{n}(i)$ ainsi que la matrice $\mathbf{M}(i)$ figurant dans l'équation (48) sont à composantes complexes. La relation (48) peut encore s'écrire sous la forme réelle équivalente:

$$\mathbf{y}_2(i)=\mathbf{d}_2(i)\mathbf{M}_2(i)+\mathbf{n}_2(i) \qquad (49)$$

avec :

$$\mathbf{y}_2(i)=\left(y_1^R(i), y_1^I(i),...,y_k^R(i), y_k^I(i)\right)$$ où $y_k^R(i), y_k^I(i)$ sont respectivement la partie réelle et la partie imaginaire du symbole $y_k(i)$;

$\mathbf{d}_2(i) = \left( d_1^R(i), d_1^I(i), \ldots, d_K^R(i), d_K^I(i) \right)$ où $d_k^R(i), d_k^I(i)$ sont respectivement la partie réelle et la partie imaginaire du symbole $d_k(i)$;

$\mathbf{n}_2(i) = \left( n_1^R(i), n_1^I(i), \ldots, n_K^R(i), n_K^I(i) \right)$ où $n_k^R(i), n_k^I(i)$ sont respectivement la partie réelle et la partie imaginaire de $n_k(i)$;

et où $\mathbf{M}_2$ est la matrice $2K \times 2K$ définie par :

$$\mathbf{M}_2 = \begin{bmatrix} M_{11}^R & M_{11}^I & \cdots & M_{1K}^R & M_{1K}^I \\ -M_{11}^I & M_{11}^R & \cdots & -M_{1K}^I & M_{1K}^R \\ \vdots & \vdots & & \vdots & \vdots \\ M_{K1}^R & M_{K1}^I & \cdots & M_{KK}^R & M_{KK}^I \\ -M_{K1}^I & M_{K1}^R & \cdots & -M_{KK}^I & M_{KK}^R \end{bmatrix} \qquad (50)$$

avec $M_{\ell k} = M_{\ell k}^R + j . M_{\ell k}^I$ où l'indice $i$ a été omis pour simplifier les notations.

L'équation (49) a une forme identique à celle de l'équation (6) et par conséquent un algorithme de détection par sphères peut s'appliquer au vecteur d'observation, y compris la simplification proposée par l'invention lorsque le point reçu est situé en dehors de la constellation.

**Revendications**

1. Méthode de détection d'une pluralité $K$ de symboles ($d_k(i)$) transmis par ou pour une pluralité $K$ d'utilisateurs à partir d'un signal reçu, chaque symbole d'un utilisateur appartenant à une constellation de modulation, la méthode de détection mettant en oeuvre un réseau de points ($\Xi$) généré par lesdites constellations de modulation, ladite pluralité de symboles des différents utilisateurs étant représentée par un point parmi un sous-ensemble de points dudit réseau, dit constellation et le signal reçu étant représenté par un point caractéristique de ce signal, dit point reçu, translaté d'un point de ladite constellation par un vecteur de bruit (**n**), **caractérisée en ce qu'**elle comprend une étape de projection orthogonale du point reçu sur un sous-espace affine, dit de projection, parallèle ou confondu avec un sous-espace affine délimitant ladite constellation et une étape de recherche du plus proche voisin du point ainsi projeté parmi les points de ladite constellation.

2. Méthode de détection selon la revendication 1, **caractérisée en ce que** ledit sous-espace affine délimitant la constellation est déterminé en fonction de la position du point reçu par rapport à ladite constellation.

3. Méthode de détection selon la revendication 2, **caractérisée en ce que** la recherche du plus proche voisin est limitée aux points de la constellation appartenant à une sphère centrée sur ledit point projeté.

4. Méthode de détection selon la revendication 1 ou 2, **caractérisée en ce que** le sous-espace affine de projection étant confondu avec un sous-espace affine délimitant la constellation, la recherche du plus proche voisin est effectuée parmi les points de la constellation appartenant audit sous-espace affine.

5. Méthode de détection selon la revendication 4, **caractérisée en ce que** la recherche du plus proche voisin est limitée aux points du sous-espace affine appartenant à une sphère dudit sous-espace centrée sur ledit point projeté.

6. Méthode de détection selon l'une des revendications précédentes, **caractérisée en ce que** l'étape de projection n'est effectuée que si le point reçu est éloigné de ladite constellation de plus d'une distance prédéterminée.

7. Méthode de détection selon l'une des revendications précédentes, **caractérisée en ce que**, les symboles de chaque utilisateur faisant l'objet d'une multiplication par une signature de cet utilisateur avant d'être transmis sur un canal de transmission, les coordonnées du point reçu sont obtenues par une étape de filtrage adapté du signal reçu, le filtrage étant adapté aux canaux de transmission et aux signatures des différents utilisateurs.

8. Dispositif de réception pour système de télécommunication DS-CDMA comprenant un dispositif de détection adapté à mettre en oeuvre la méthode de détection selon l'une des revendications précédentes.

9. Dispositif de réception pour système de télécommunication MC-CDMA comprenant un dispositif de détection adapté à mettre en oeuvre la méthode de détection selon l'une des revendications 1 à 7.

**Claims**

1. Method of detecting a plurality $K$ of symbols ($d_k(i)$) transmitted by or for a plurality $K$ of users from a received signal, each symbol of a user belonging to a modulation constellation, the detection method utilising a network of points ($\Xi$) generated by said modulation constellations, said plurality of symbols of the various users being represented by a point amongst a sub-set of points of said network, called a constellation, and the received signal being represented by a characteristic point of this signal, called the received point, translated from a point of said constellation by a noise vector (**n**), **characterised in that** it includes a step of orthogonally projecting the received point onto an affine sub-space, called the projection sub-space, parallel to or merged with an affine sub-space defining said constellation, and a step of seeking the closest neighbour to the point thus projected amongst the points of said constellation.

2. Detection method according to claim 1, **characterised in that** said affine sub-space defining the constellation is determined according to the position of the received point with respect to said constellation.

3. Detection method according to claim 2, **characterised in that** the search for the closest neighbour is limited to the points of the constellation belonging to a sphere centred on said projected point.

4. Detection method according to claim 1 or 2, **characterised in that**, the affine projection sub-space being merged with an affine sub-space defining the constellation, the search for the closest neighbour is effected amongst the points of the constellation belonging to said affine sub-space.

5. Detection method according to claim 4, **characterised in that** the search for the closest neighbour is limited to the points of the affine sub-space belonging to a sphere of said sub-space centred on said projected point.

6. Detection method according to one of the preceding claims, **characterised in that** the projection step is only effected if the received point is remote from said constellation by more than a predetermined distance.

7. Detection method according to one of the preceding claims, **characterised in that**, the symbols of each user beg the subject of a multiplication by a signature of this user before being transmitted over a transmission channel, the co-ordinates of the received point are obtained by a step of adapted filtering of the received signal, the filtering being adapted to the transmission channels and to the signatures of the various users.

8. Reception apparatus for a DS-CDMA telecommunication system, including a detection apparatus adapted to utilise the detection method according to one of the preceding claims.

9. Reception apparatus for an MC-CDMA telecommunication system, including a detection apparatus adapted to utilise the detection method according to one of claims 1 to 7.

**Patentansprüche**

1. Detektionsverfahren für eine Vielzahl $K$ von Symbolen ($d_k(i)$), welche von oder für eine Vielzahl $K$ von Nutzern ausgehend von einem Empfangssignal gesendet werden, wobei jedes Symbol eines Nutzers einer Modulationskonstellation angehört, wobei das Detektionsverfahren ein Punktnetz ($\Xi$), das aus den Modulationskonstellationen erzeugt wird, schafft, wobei die Vielzahl von Symbolen unterschiedlicher Nutzer durch einen Punkt in einer Untergruppe von Punkten des Netzes dargestellt wird und die Konstellation und das Empfangssignal durch einen für dieses Signal charakteristischen Punkt, dem Empfangspunkt, der von einem Punkt der Konstellation durch einen Rauschvektor (n) übertragen wird, dargestellt werden, **dadurch gekennzeichnet, dass** es einen Schritt einer orthogonalen Projektion des Emfangspunkts auf einen affinen Unterraum der Projektion, der parallel zu einem affinen Unterraum ist oder diesen durchdringt, welcher die Konstellation begrenzt, und einen Schritt eines Suchens nach dem nächsten Nachbarn des so projizierten Punkts unter den Punkten der Konstellation umfasst.

**2.** Detektionsverfahren nach Anspruch 1, **dadurch gekennzeichnet, dass** der die Konstellation begrenzende affine Unterraum in Abhängigkeit von der Position des Empfangspunkts bezüglich der Konstellation bestimmt wird.

**3.** Detektionsverfahren nach Anspruch 2, **dadurch gekennzeichnet, dass** die Suche nach dem nächsten Nachbarn auf Punkte der Konstellation beschränkt ist, die einem in dem projizierten Punkt zentrierten Bereich angehören.

**4.** Detektionsverfahren nach Anspruch 1 oder 2, **dadurch gekennzeichnet, dass** dann, wenn der affine Unterraum der Projektion einen die Konstellation begrenzenden affinen Unterraum durchdringt, die Suche nach dem nächsten Nachbarn unter den Punkten der Konstellation ausgeführt wird, welche dem affinen Unterraum angehören.

**5.** Detektionsverfahren nach Anspruch 4, **dadurch gekennzeichnet, dass** die Suche nach dem nächsten Nachbarn auf Punkte des affinen Unterraums beschränkt ist, die einem in dem projizierten Punkt zentrierten Bereich des Unterraums angehören.

**6.** Detektionsverfahren nach einem der vorhergehenden Ansprüche, **dadurch gekennzeichnet, dass** der Projektionsschritt nicht ausgeführt wird, wenn der Empfangspunkt von der Konstellation um mehr als einen vorgegebenen Abstand beabstandet ist.

**7.** Detektionsverfahren nach einem der vorhergehenden Ansprüche, **dadurch gekennzeichnet, dass** die Symbole jedes Nutzers einen Gegenstand der Multiplikation durch eine Signatur des Nutzers vor dem Senden auf einem Sendekanal darstellen, die Koordinaten des Empfangspunkts durch einen Schritt eines adaptiven bzw. angepassten Filters des Empfangssignals erhalten werden, wobei das Filtern an die Sendekanäle und die Signatur unterschiedlicher Nutzer angepasst ist.

**8.** Empfangsvorrichtung für ein DS-CDMA-Telekommunikationssystem, umfassend eine Detektionsvorrichtung, die geeignet ist, das Detektionsverfahren nach einem der vorhergehenden Ansprüche auszuführen.

**9.** Empfangsvorrichtung für ein MC-CDMA-Telekommunikationssystem, umfassend eine Vorrichtung, die geeignet ist, das Detektionsverfahren nach einem der Ansprüche 1 bis 7 auszuführen.

FIG.1

FIG.2

FIG. 3

FIG.4

EP 1 223 687 B1

FIG.5

## RÉFÉRENCES CITÉES DANS LA DESCRIPTION

**Documents brevets cités dans la description**

- FR 0016351

**Littérature non-brevet citée dans la description**

- **S. VERDU.** Minimum probability of error for asynchronous Gaussian multiple access channels. IEEE Transactions on Information Theory, Janvier 1986, 85-96

- **L. BRUNEL et al.** Euclidian space lattice decoding for joint detection in CDMA system. Proceedings of ITW, Juin 1999, 129